# EUROPEAN PATENT APPLICATION

(11) **EP 2 098 949 A2**
(43) Date of publication of application: **09.09.2009**
(21) Application number: 09154382.7
(22) Date of filing: 05.03.2009
(51) Int. Cl.: G06F 3/048

(54) **Display controller and item display method**

(30) Priority: 06.03.2008 JP 2008056894
(71) Applicant: Nissan Motor Co., Ltd., Kanagawa 221-0023 (JP)
(72) Inventor: Suzuki, Hiroyuki, c/o Nissan Motor Co., Ltd., Atsugi-shi Kanagawa 243-0123 (JP); Watanabe, Masafumi, c/o Nissan Motor Co., Ltd., Atsugi-shi Kanagawa 243-0123 (JP)
(74) Representative: Hager, Thomas Johannes

(57) **Abstract**

A display controller or the like executes an item desired by the user while plural items are displayed. Plural menu item display regions, such as a menu image of a DVD, etc., are displayed. When a touching location on the display screen is detected, in the case when the detected user's touching location corresponds to plural menu item display regions on display screen that allow selection of menu item display regions, processing is executed corresponding to the menu item display region corresponding to the menu item selection region determined according to a prescribed condition. Even when plural menu item display regions overlap each other, it is still possible to select a menu item display region corresponding to a given menu item selection region.

## Description

The invention relates generally to a display controller and an item display method and particularly, but not exclusively, to a controller and method for performing processing that corresponds to a selected item when a user makes a selection while, for example, menu items or other plural items are displayed. Aspects of the invention relate to an apparatus, to a controller, to a method and to a vehicle.

Japanese Kokai Patent Application No. 2002-351618 discloses a technology for selecting menu items by performing operations on a liquid crystal panel that works as a touch panel and has plural menu items displayed on it.

As taught therein, for example, the plural menu items for the operation of a DVD recording/playback device are displayed on a touch panel, and the user's operating location on the touch panel (the location where the user touches the touch panel) is detected. Here, a menu item selection region for recognizing the menu item is provided for each menu item. When the user's touching location is within the menu item selection region of a certain menu item, processing corresponding to the menu item is executed by the DVD recording/playback device.

According to Japanese Kokai Patent Application No. 2002-351618, to prevent failure in identifying the menu item when the user's touching location corresponds to plural menu item selection regions, the image containing the menu items in the vicinity of the user's touching location is enlarged, and the user is prompted to perform the selection operation again. However, when the proportion of overlap of one menu item selection region with another menu item selection region is high, it may be impossible to select the desired menu item according to the user's touching location.

It is an aim of the present invention to address this issue and to improve upon known technology. Embodiments of the invention may provide a display controller and item display method that can ensure execution of the item desired by the user when plural items are displayed. Even when plural operation item selection regions overlap each other, it is still possible to select the operation item corresponding to a certain operation item selection region, and it is possible to execute the item desired by the user when plural items are displayed. Other aims and advantages of the invention will become apparent from the following description, claims and drawings.

Aspects of the invention therefore provide an apparatus, a method and a vehicle as claimed in the appended claims.

According to another aspect of the invention for which protection is sought, there is provided a touch panel display control for a touch panel that allows the user to touch its screen in performing an operation, the display control comprising an image output part configured to display a first operation item in a first operation item display region on the screen and to display a second operation item in a second operation item display region on the screen and a controller configured to create a first operation item selection region, which extends to contain the first operation item display region, and which, when the user touches the first operation item selection region, permits the first operation item to be selected, to create a second operation item selection region, which extends to contain the second operation item display region, and which, when the user touches the second operation item selection region, permits the second operation item to be selected, and to select either the first operation item or the second operation item based on a prescribed parameter pertaining to the shapes of the first operation item selection region and the second operation item selection region when a location touched by the user is a region where the first operation item selection region and the second operation item selection region overlap each other on the screen.

In an embodiment, the prescribed parameter is such that either the first operation item or the second operation item is selected belonging to that of the first operation item selection region or the second operation item selection region for which its centroid is a shorter distance from the location touched by the user.

In an embodiment, the prescribed parameter is such that either the first operation item or the second operation item is selected belonging to that of the first operation item selection region or the second operation item selection regions for which its size is smallest.

In an embodiment, the image output part is further configured to display at least one of the first operation item selection region and the second operation item selection region on the touch panel responsive to the controller.

In an embodiment, the controller is configured to display the location touched by the user on the screen.

According to a further aspect of the invention for which protection is sought, there is provided a touch panel display controller for a touch panel that allows a user to touch its screen in performing an operation, the display controller comprising means for displaying a first operation item in a first operation item display region of the screen, means for creating a first operation item selection region permitting selection of the first operation item when the user touches the first operation item selection region, the first operation item selection region extending to contain the first operation item display region, means for displaying a second operation item in a second operation item display region of the screen, means for creating a second operation item selection region permitting selection of the first operation item when the user touches the second operation item selection region, second operation item selection region extending to contain the second operation item display region and means for selecting one of the first operation item and the second operation item using a prescribed parameter pertaining to shapes of the first operation item selection region and the second operation item selection region when a location touched by the user is a region where the first operation item selection region and the second operation item selection region overlap each other on the screen.

According to a still further aspect of the invention for which protection is sought, there is provided an item display method for a touch panel that allows a user to touch its screen in performing an operation, the method comprising displaying a first operation item in a first operation item display region of the screen, creating a first operation item selection region permitting selection of the first operation item when the user touches the first operation item selection region, the first operation item selection region extending to contain the first operation item display region, displaying a second operation item in a second operation item display region of the screen, creating a second operation item selection region permitting selection of the first operation item when the user touches the second operation item selection region, second operation item selection region extending to contain the second operation item display region and selecting one of the first operation item and the second operation item using a prescribed parameter pertaining to shapes of the first operation item selection region and the second operation item selection region when a location touched by the user is a region where the first operation item selection region and the second operation item selection region overlap each other on the screen.

In an embodiment, the prescribed parameter is a centroid. The first operation item selection region may have a first centroid and the second operation item selection region may have a second centroid.

In an embodiment, selecting one of the first operation item and the second operation item using the prescribed parameter comprises selecting the first operation item when the first centroid is closer to the location touched by the user than the second centroid and selecting the second operation item when the second centroid is closer to the location touched by the user than the first centroid.

In an embodiment, the prescribed parameter is a size. The first operation item selection region may have a first size and the second operation item selection region may have a second size.

In an embodiment, selecting one of the first operation item and the second operation item using the prescribed parameter comprises selecting the first operation item when the first size is smaller than the second size and selecting the second operation item when the second size is smaller than the first size.

The method may comprise displaying at least one of the first operation item selection region and the second operation item selection region on the touch panel.

The method may comprise displaying the location touched by the user on the screen.

For example, in one embodiment of the invention, plural operation items are displayed, and when a touching location on the display screen is detected, if the detected user's touching location corresponds to plural operation item selection regions on the display screen which allows selection of various operation items, processing is executed so that the operation item corresponding to a certain operation item selection region is selected according to a prescribed condition.

Alternatively, or in addition, when the operation item selection regions selected by the user overlap, the specific operation item selected by the user is determined based on a prescribed parameter pertaining to the shape of the operation item selection region, for example a parameter pertaining to the centroid or size of the operation item selection region.

In a first embodiment described below, a determination is made according to a relationship between the location touched by the user and the centroid. In a second embodiment described below, a determination is made according to the size of the area of the operation item selection region. In the first and second embodiments, the operation item selection region may not be displayed. In a third embodiment described below, the operation item selection region is displayed. In a fourth embodiment described below, there is a redisplay in list form.

Within the scope of this application it is envisaged that the various aspects, embodiments, examples, features and alternatives set out in the preceding paragraphs, in the claims and/or in the following description and drawings may be taken individually or in any combination thereof.

The present invention will now be described, by way of example only, with reference to the accompanying drawings, in which:
FIG. 1 is a block diagram illustrating a vehicle onboard system in which embodiments of the invention can be adopted;
FIG. 2 is a diagram illustrating the menu item display regions and menu item selection regions of the menu image displayed by the vehicle onboard system pertaining to Embodiment 1 of the invention;
FIG. 3 is a diagram illustrating the processing performed by the vehicle onboard system in Embodiment 1 in which the operated menu item is selected based on the position of the centroid of the menu item selection region;
FIG. 4 is a flow chart illustrating the processing performed in the vehicle onboard system pertaining to Embodiment 1 in which the operated menu item is selected based on the position of the centroid of the menu item selection region;
FIG. 5 is a diagram illustrating display of the user's touching location on the display screen in the vehicle onboard system pertaining to Embodiment 1;
FIG. 6 is a diagram illustrating the processing performed in the vehicle onboard system pertaining to Embodiment 2 of the invention in which the operated menu item is selected based on the size of the menu item selection region;
FIG. 7 is a flow chart illustrating the processing performed in the vehicle onboard system pertaining to Embodiment 2 in which the operated menu item is selected based on the size of the menu item selection region;
FIG. 8 is a diagram illustrating the vehicle onboard system pertaining to Embodiment 3 of the invention in which the menu item selection region is displayed;
FIG. 9 is a diagram illustrating the list display of the menu item selection region when there are overlapped menu item selection regions in the vehicle onboard system in Embodiment 4 of the invention;
FIG. 10 is a diagram illustrating the menu item display region and menu item selection region that tracks the user's touching location in the vehicle onboard system pertaining to Embodiment 5 of the invention; and
FIG. 11 is another figure illustrating the menu item display region and menu item selection region tracking the user's touching location in the vehicle onboard system pertaining to Embodiment 5.

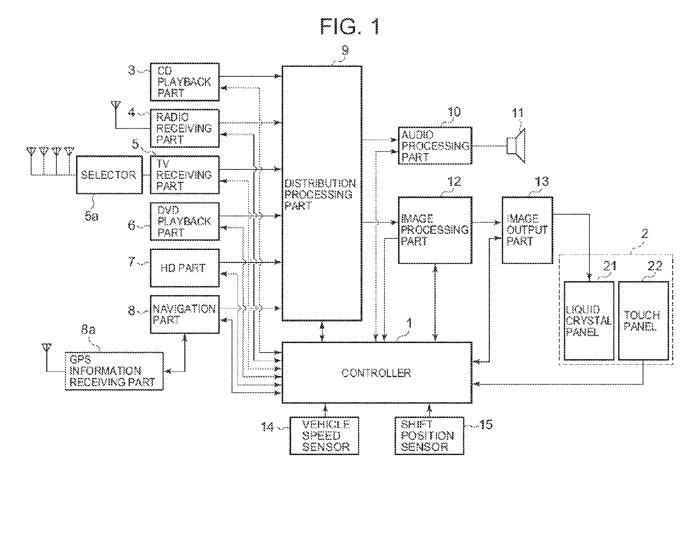

Embodiments of the display controller and item display method of the invention, for example, may be adopted on a vehicle onboard system pertaining with the configuration shown in FIG. 1. This vehicle onboard system has the following functions: a navigation function, an audio playback function for reproducing the audio signals recorded on a CD (compact disk), HDD or other recording media, or a radio broadcast program, and an image playback function for reproducing image signals recorded on a DVD (Digital Versatile Disc), HDD or other recording media.

This vehicle onboard system controls the display of images and various types of information on display part 2 by means of controller 1. Also, the vehicle onboard system lets the user perform various operations by displaying menu information, including plural menu items (operation items), on display part 2. In the following, the menu items as operation items for selection by the user are explained. However, the invention is not limited to this, and the invention also allows operations for listing information, icons, etc.

As the sources of the image, audio and various the types of information, the vehicle onboard system has CD playback part 3, radio receiver 4, TV receiver 5 as well as selector 5a, DVD playback part 6, HD recording/playback part 7, navigation part 8 and GPS information receiver 8a. Also, for the output of image, audio and various types of information, the vehicle onboard system has the following parts: distribution processing part 9 connected to parts 3-8, audio processing part 10 and speaker 11, image processing part 12 and image output part 13. In addition, for detecting the running state of the vehicle, the vehicle onboard system has vehicle speed sensor 14 that supplies vehicle speed information and shift position sensor 15 that supplies shift position information to controller 1.

Controller 1 is implemented by, for example, a microcomputer including a random access memory (RAM), a read-only memory (ROM) and a central processing unit (CPU), along with various input and output connections. Generally, processing of arithmetic and logic operations (that is, control) performed by controller 1 is performed by execution by the CPU of one or more software programs stored in ROM. Of course, some or all of the functions can be implemented by hardware components.

Display part 2 displays the images recorded on a DVD, TV images and an operation menu as a display screen. Display part 2 includes liquid crystal panel 21 for display of the various types of information on the display screen, and touch panel 22 made of transparent film switches or the like for detecting user operations in touching the display screen. Liquid crystal panel 21 performs operations according to the video data sent from image output part 13 in order to display the DVD or TV images. Also, according to the menu images supplied by image output part 13, liquid crystal panel 21 displays the menu image for the operation of the various parts of the vehicle onboard system. Touch panel 22 outputs the display screen touching location information to controller 1 when a user's touching location on the display screen is detected.

CD playback part 3 reads CD audio data recorded on a CD and outputs them to distribution processing part 9. Radio receiver 4 receives radio broadcast signals and outputs the radio audio data to distribution processing part 9. TV receiver 5 receives television broadcast signals received by selector 5a and outputs them as TV video data to distribution processing part 9. DVD playback part 6 reads video data recorded on a DVD and outputs them as DVD video data to distribution processing part 9. HD recording/playback part 7 reads the signals recorded on a magnetic disk and outputs them to distribution processing part 9, and at the same time, information sent from distribution processing part 9 is recorded on the magnetic disk.

HD recording/playback part 7 can also store data for the route searching map, maps and scenic spot display map for use by navigation part 8, in addition to audio data for music, music titles and other music information data. In addition, HD recording/playback part 7 is also used for temporary storage for processing of registration location information, recommended path information and other data registered in navigation part 8.

Navigation part 8 performs display of the map data stored in HD recording/playback part 7 and the current location, setting of the destination, searching for the recommended path from the current location of the vehicle to the destination set by the user with reference to the map data recorded in HD recording/playback part 7, guidance along the recommended path, notification of traffic information, etc. Based on the current location information sent from GPS information receiver 8a, navigation part 8 performs display of the current location and guidance along the recommended path. GPS information receiver 8a receives the GPS signal from GPS satellites and computes the current location information of the vehicle based on the GPS signal.

For example, according to the operations performed by the user on touch panel 22, a control signal is sent from controller 1 to CD playback part 3, radio receiver 4, TV receiver 5, DVD playback part 6, HD recording/playback part 7 and navigation part 8. As a result, operation of CD playback part 3, radio receiver 4, TV receiver 5, DVD playback part 6, HD recording/playback part 7 and navigation part 8 is performed according to the control signals.

Distribution processing part 9 selectively takes the data sent from CD playback part 3, radio receiver 4, TV receiver 5, DVD playback part 6, HD recording/playback part 7 or navigation part 8 as input, outputs the audio data to audio processing part 10, and outputs the video data and menu image data to image processing part 12. For example, distribution processing part 9 sends control signals according to the user's operations on touch panel 22. According to the control signals, distribution processing part 9 then performs switching operations to distribute data sent from CD playback part 3, radio receiver 4, TV receiver 5, DVD playback part 6, HD recording/playback part 7 and navigation part 8.

Audio processing part 10 processes the audio data fed from distribution processing part 9 and performs adjustment of the output level of the sound, adjustment of the frequency characteristics, and adjustment of the sonic field characteristics (characteristics of echo and reverberation due to display processing, etc.). Audio processing part 10 consists of a digital signal processor comprising DSP, etc. The audio processing performed by audio processing part 10 is adjusted according to a control signal from controller 1 according to user operations in adjusting the sound output level. The audio signal processed with audio processing part 10 is amplified by an amplifier (not shown in the figure), and the sound is output from speaker 11.

Image processing part 12 performs various types of image processing, such as processing of video data and menu image data to adjust the hue and brightness of the displayed image, to adjust contrast, to divide or enlarge/shrink the image, to perform overlapped display of text, etc. Image processing part 12 comprises an image memory that stores the video data and menu image data, a digital processor consisting of a DSP that performs digital arithmetic and logic operations processing for the video data and menu image data stored in the image memory, VRAM (video RAM) that stores the display output image, etc. The processing performed by image processing part 12 is adjusted according to control signals from controller 1 according to user operations.

Image output part 13 drives liquid crystal panel 21 to display images on display part 2 based on the data stored in the VRAM of image processing part 12. Image output part 13 comprises a converter for converting the data stored in the VRAM of image processing part 12 to the image signals for driving liquid crystal panel 21, an amplifier, a synchronization signal generator, etc. The operation of image output part 13 is controlled by control signals from controller 1.

In this way, controller 1 controls distribution processing part 9, image processing part 12 and image output part 13, and it works as a display control for displaying plural menu items displayed on liquid crystal panel 21 of display part 2.

Controller 1 performs overall control of the various parts according to the touching location information detected by way of touch panel 22. When CD playback part 3, radio receiver 4, TV receiver 5 and navigation part 8 are controlled, controller 1 reads the menu information stored beforehand in, for example, HD recording/playback part 7, and outputs the menu image data from HD recording/playback part 7 to distribution processing part 9.

The menu information stored in HD recording/playback part 7 includes plural menu items arranged in various hierarchical layers among multiple hierarchical layers and includes information for displaying plural menu items in a single image. The menu information contains menu video data having plural menu items arranged on a single screen for each hierarchical layer and coordinate information indicating the menu item selection regions that allow selection of the various menu items on touch panel 22. In addition to the choices available for selection by the user, an OK button and a cancel button may also be included as menu items.

According to the control signals from controller 1, HD recording/playback part 7 uses the menu information as references in forming the menu video data from the plural menu items. Here, menu information for the operation of CD playback part 3, radio receiver 4, TV receiver 5 and navigation part 8 stored in HD recording/playback part 7 becomes the coordinate information for the layout and menu item selection regions of the menu items designed corresponding to the shape or size or the like of the display image of display part 2. Consequently, even when the menu image for the operation of CD playback part 3, radio receiver 4, TV receiver 5 and navigation part 8 is displayed on display part 2, there is still no overlap between the menu item selection regions of the various menu items.

When the content data stored in the DVD loaded in DVD playback part 6 are to be reproduced or the like, controller 1 reads the menu information stored in the DVD by means of DVD playback part 6 and outputs the menu video data to distribution processing part 9. Here, controller 1 allows reproduction of the content stored in the DVD only when the vehicle is stopped, as judged from the vehicle speed signal obtained from vehicle speed sensor 14 and the shift position signal obtained from shift position sensor 15, etc. On the other hand, controller 1 prohibits reproduction of the content stored in the DVD when it is judged that the vehicle is traveling, as determined from the vehicle speed, shift position, etc.

Just as with the menu information stored in HD recording/playback part 7, the menu information stored in the DVD is information that contains plural menu items and is for displaying plural menu items on the same screen. The menu information contains menu video data for the layout of plural menu items on the same screen for each hierarchical layer and coordinate information indicating the menu item selection regions that allow selection of the various menu items on touch panel 22. In addition to the choices available for selection by the user, the menu items also include an OK button and a cancel button.

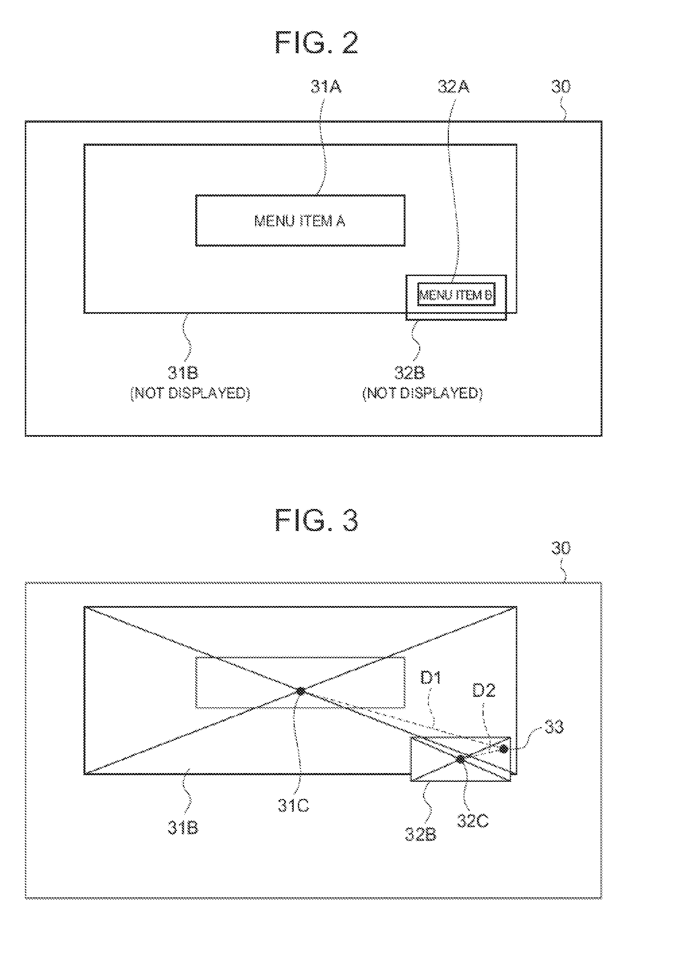

The menu information recorded on the DVD is designed by the person who prepared the content of the DVD. Consequently, the layout of the menu items and the width of the menu item selection regions are determined by the DVD content preparer. As a result, for the menu information of the DVD, there is no rule with respect to menu item display region 31A or menu item selection region 31 B shown in FIG. 2, or menu item display region 32A or menu item selection region 32B.

More specifically, FIG. 2 shows an example when the menu image is displayed in display part 2 for the operation of DVD playback part 6. Menu item selection region 31 B, which is wider than menu item display region 31A of menu item A, and menu item selection region 32B, which is wider than menu item display region 32A of menu item B, may overlap each other on display screen 30 of display part 2.

The causes for this problem can include the facts that the menu information of the DVD has an image larger than display screen 30 of display part 2, and the coordinate information for each menu item selection region is set assuming an image with an aspect ratio different from that of display screen 30 of display part 2. Consequently, even when the vehicle onboard system makes use of image processing part 12 to perform contraction or other processing of the menu image data of the DVD output from DVD playback part 6, and menu item A and menu item B are displayed in menu item display region 31A and menu item display region 32A such that they fit display screen 30 of liquid crystal panel 21, there is still overlap between menu item selection region 31 B of menu item A and menu item selection region 32B of menu item B.

Here, controller 1 works as follows. When the user's touching location is detected on touch panel 22 with respect to the menu item selection regions on display screen 30 that allow selection of the various menu items displayed on display screen 30 of display part 2, if the detected user's touching location corresponds to plural menu item selection regions, processing is executed to determine the menu item corresponding to a certain menu item selection region according to a prescribed condition. In this manner, a selection function is performed.

More specifically, controller 1 adopts the following scheme as the prescribed condition: the menu item of the menu item selection region whose centroid has the smallest distance from the touching location is selected from among the plural menu item selection regions that contain the detected touching location on touch panel 22. That is, as shown in FIG. 3, when menu item selection region 31 B of menu item A and menu item selection region 32B of menu item B overlap each other, controller 1 compares distance D1, which is between centroid position 31C of menu item selection region 31 B and touching location 33, and distance D2, which is between centroid position 32C of menu item selection region 32B and touching location 33. Based on this comparison, the controller 1 judges that menu item B with the shorter distance should be selected. In FIGS. 2 and 3, in order to facilitate explanation, menu item selection region 31 B and menu item selection region 32B are shown as lines. In practice, however, they are not displayed in this way.

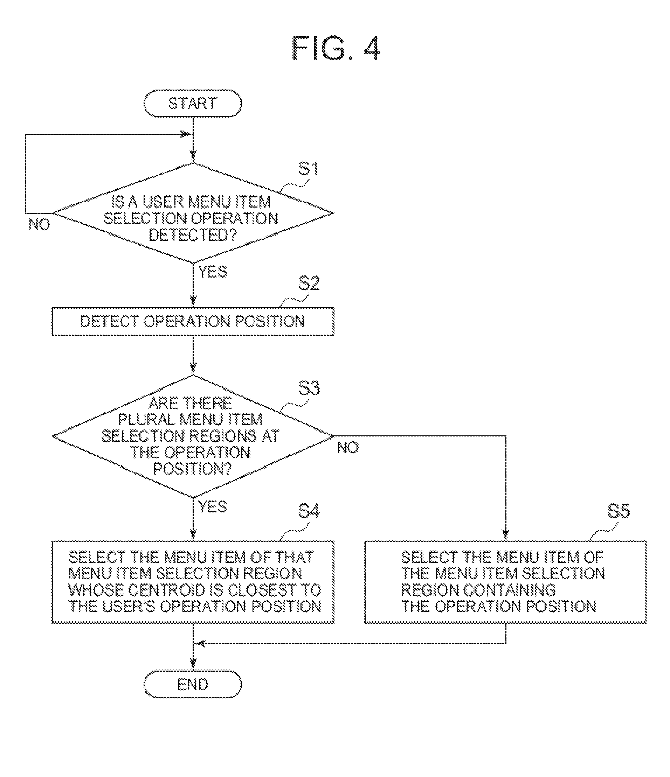

As shown in FIG. 4, controller 1 works as follows. First, in step S1, the touching location information is sent from touch panel 22, and when a user operation for determining a menu item is detected on touch panel 22, flow proceeds to step S2.

In step S2, controller 1 detects the touching location on display screen 30 based on the touching location information sent in step S1, and flow proceeds to step S3.

In step S3, controller 1 judges whether there are plural menu item selection regions at the touching location on display screen 30 detected in step S2. If there are plural menu item selection regions at the touching location, flow proceeds to step S4. On the other hand, if there are not plural menu items at the touching location, flow proceeds to step S5.

Here, when the menu image data are displayed on liquid crystal panel 21 of display screen 30, controller 1 performs arithmetic and logic operations for the menu item selection region based on the layout of the various menu items and the coordinate information for the menu item selection regions in the menu image. Also, controller 1 performs arithmetic and logic operations for the positions of the centroids of the menu item selection regions based on the menu item selection regions obtained in the arithmetic and logic operations.

For example, as shown in FIG. 3, when touching location 33 is detected with respect to the overlap region between menu item selection region 31 B and menu item selection region 32B, flow proceeds to step S4.

In step S4, controller 1 selects the menu item for which the position of the centroid of that menu item's selection region is nearest the user's touching location from among the menu item selection regions judged in step S3 to be plural menu item selection regions present at the touching location.

Here, when the device to be operated is DVD playback part 6, the selected menu item information is sent to DVD playback part 6. As a result, the vehicle onboard system performs the recording/playback operation with DVD playback part 6, or the menu image on display screen 30 can be replaced with a lower layer menu image.

On the other hand, in step S5, controller 1 selects the menu item of the menu item selection region containing the touching location. Assuming the device to be operated is navigation part 8 or the like, controller part 1 sends the selected menu item information to navigation part 8 or the like. As a result, the vehicle onboard system performs the operation desired by the user with navigation part 8 or the like, or the menu image on display screen 30 is replaced with a lower level menu image.

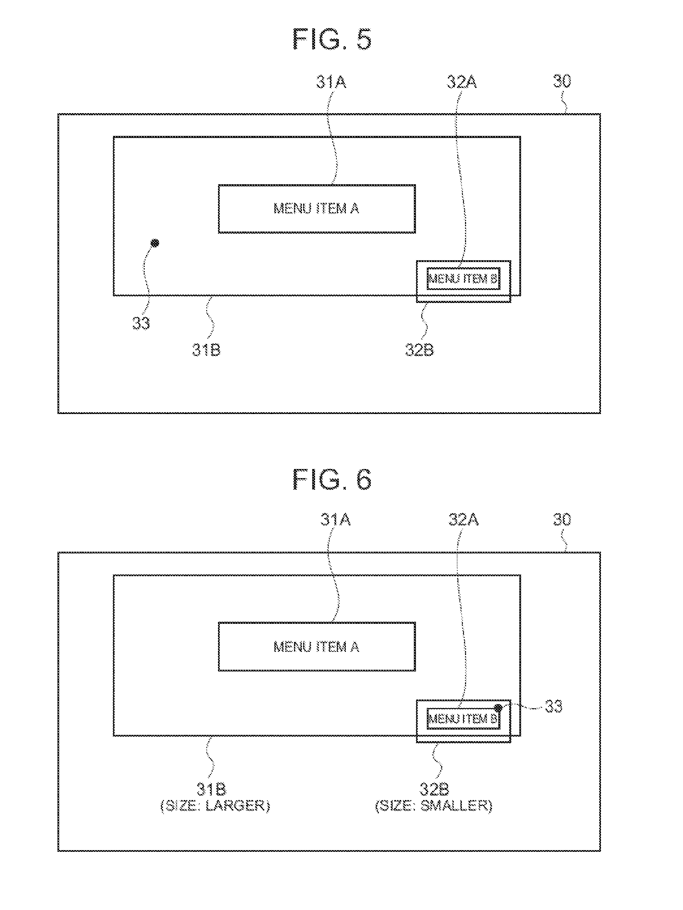

When the user performs operations on touch panel 22, it is preferred that the vehicle onboard system display touching location 33 as shown in FIG. 5. When the touching location information is sent from touch panel 22, controller 1 sends the control signals containing the supplied touching location information to image processing part 12 for overlapping display of touching location 33 in order to display the touching location. Here, image processing part 12 controls image output part 13 and liquid crystal panel 21 such that the menu image overlapped at touching location 33 is refreshed corresponding to the touching location information contained in the control signal. As a result, the vehicle onboard system can show to the user himself/herself the user's touching location recognized by the vehicle onboard system.

As explained in detail above, for the vehicle onboard system pertaining to Embodiment 1, when a user operation is detected on touch panel 22, if the user's touching location corresponds to the menu item selection regions of plural menu items, it is possible to execute processing to determine the menu item corresponding to a certain menu item selection region according to a prescribed condition. As a result, according to this vehicle onboard system, even when a user operation is detected in a region where plural menu item selection regions overlap, the operation desired by the user can still be executed.

More specifically, for the vehicle onboard system, the menu item of the menu item selection region whose centroid has the shortest distance from the touching location is selected. Thus, even when an operation is performed in a region where the menu item selection regions overlap, the operation desired by the user can still be executed.

As shown in FIG. 5, according to this vehicle onboard system, the user's touching location on touch panel 22 is displayed on liquid crystal panel 21. In this manner, the user touching location recognized by the vehicle onboard system can be displayed so that the user's touching location can be confirmed.

In the following, the vehicle onboard system pertaining to Embodiment 2 of the invention is explained. Parts that are the same as those in Embodiment 1 are assigned the same symbols, and their detailed explanation is not repeated.

For the vehicle onboard system in Embodiment 2, when the user's touching location corresponds to plural menu item selection regions displayed on the screen, controller 1 adopts the following rule. The operation item of the menu item selection region having the smallest size among the plural menu item selection regions containing the touching location is selected. That is, as shown in FIG. 6, assuming menu item selection region 31 B of menu item A and menu item selection region 32B of menu item B overlap each other, controller 1 compares the size of menu item selection region 31 B to that of menu item selection region 32B, and makes the judgment that menu item B, whose selection region is smaller, should be selected.

In FIG. 6, in order to facilitate explanation, menu item display region 31A, menu item selection region 31 B, menu item display region 32A and menu item selection region 32B are shown as lines. In practice, however, they may be shown otherwise, and the contents of the menu items within menu item display region 31A and menu item display region 32A are displayed only by text.

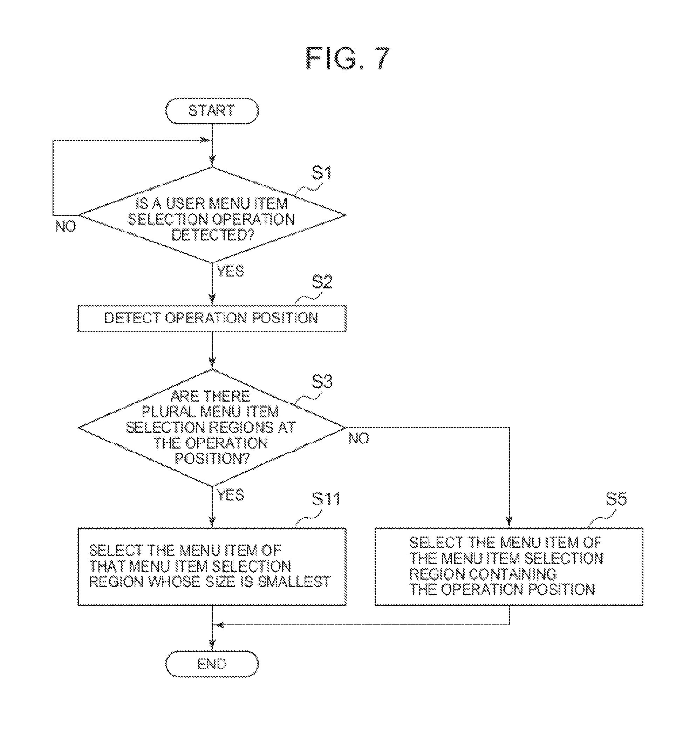

As shown in FIG. 7, when it is judged that there are plural menu item selection regions at the touching location in step S3, flow proceeds to step S11, in which one menu item is selected by control part 1 based on the size of the menu item selection region.

In step S11, controller 1 selects the menu item of the menu item selection region that is smallest from among the plural menu item selection regions judged to be present at the touching location in step S3. Here, controller 1 predetermines the size of each menu item selection region with reference to the coordinate information of the menu item selection regions of the various menu items obtained when the menu image is displayed on liquid crystal panel 21.

Here, assuming the device to be operated is DVD playback part 6, the selected menu item information is sent to DVD playback part 6. As a result, the vehicle onboard system performs the recording/playback operation of DVD playback part 6, or the menu image of display screen 30 is replaced with a lower layer menu image.

As explained in detail above, for the vehicle onboard system in Embodiment 2, when a user operation on touch panel 22 is detected, if the user's touching location corresponds to the menu item selection regions of plural menu items, the menu item of the menu item selection region that is smallest among the plural menu item selection regions is selected. As a result, it is possible to realize the effect that the vehicle onboard system can execute the operation desired by the user even when the region of operation includes plural overlapping menu item selection regions.

In the following, the vehicle onboard system pertaining to Embodiment 3 of the invention is explained. Parts that are the same as those in the previous embodiments are assigned the same symbols, and their detailed explanation is not repeated.

The vehicle onboard system pertaining to Embodiment 3 differs from Embodiments 1 and 2 in that the menu item selection regions corresponding to various menu items are displayed on liquid crystal panel 21.

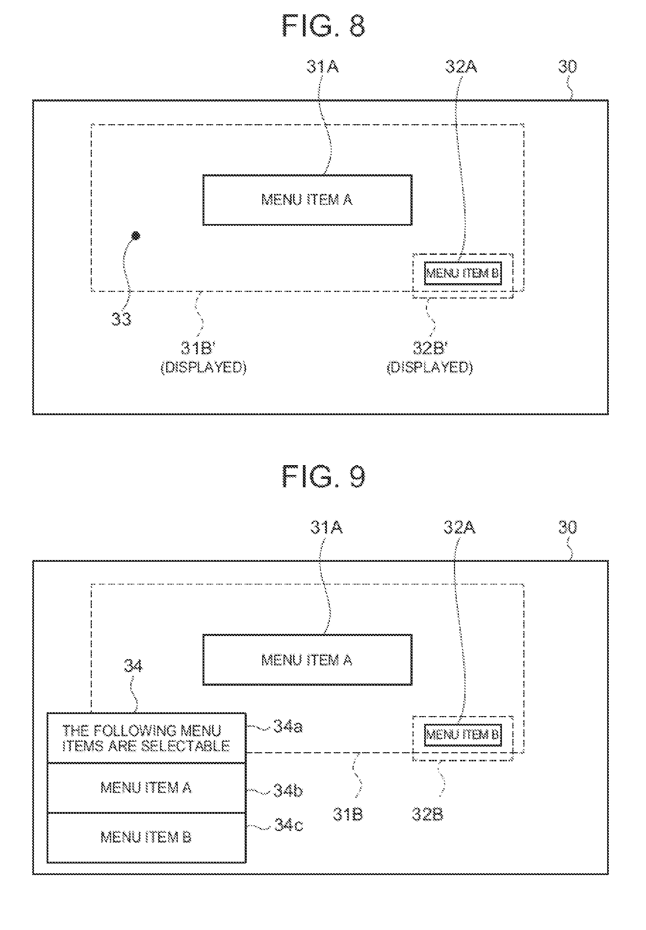

As shown in FIG. 8, for this vehicle onboard system, when menu item A and menu item B are displayed, menu item selection region 31B' and menu item selection region 32B' indicated by broken lines are displayed.

For this vehicle onboard system, when a menu image is displayed on liquid crystal panel 21, based on the layout of the various menu items on the menu image and the coordinate information of the menu item selection regions obtained with controller 1, arithmetic and logic operations are performed using the coordinates of menu item selection region 31 B and menu item selection region 32B on display screen 30. Controller 1 then sends the coordinates of menu item selection region 31 B and menu item selection region 32B to image processing part 12 as control signals indicating overlapping display on the menu image. Menu item selection region 31 B' and menu item selection region 32B' are then displayed as shown in FIG. 8.

In this way, according to the vehicle onboard system in Embodiment 3, the menu item selection regions that allow selection of menu items are displayed to the user so that it is possible to perform the operation by avoiding the region where the menu item selection regions overlap. As a result, even when the menu item selection regions overlap each other, the vehicle onboard system still can perform the operation desired by the user.

For this vehicle onboard system, a scheme may be adopted such that only when it is detected that plural menu item selection regions overlap each other are menu item selection region 31 B' and menu item selection region 32B' displayed.

In the following, the vehicle onboard system pertaining to Embodiment 4 of the invention is explained. Parts that are the same as those in the previous embodiments are assigned the same symbols, and their detailed explanation is not repeated.

For the vehicle onboard system in Embodiment 4, controller 1 enables the menu item selection regions of the plural menu items that can be selected to be displayed without overlap on liquid crystal panel 21 when the menu item selection regions corresponding to the menu items overlap each other.

As shown in FIG. 9, for this vehicle onboard system, assuming it is detected that menu item selection region 31 B of menu item A and menu item selection region 32B of menu item B overlap on display screen 30, operation list 34 is displayed that includes message 34a saying "The following menu items are selectable." In addition, menu item selection region 34b of menu item A displays menu item A as text, and menu item selection region 34c of menu item B displays menu item B as text. Operation list 34 is displayed in a region where menu item selection region 31 B and menu item selection region 32B do not overlap each other, if possible.

The display data of operation list 34 is prepared by controller 1, and the operation list 34 is then overlapped on the menu image by means of image processing part 12. For example, controller 1 works as follows. When the menu information of DVD playback part 6 is displayed, in a situation where menu items of the menu item selection regions that overlap each other are acquired, the display data of operation list 34 is formed as a combination of the plural menu item titles and message 34a and is sent to image output part 13. Then, by means of image output part 13, controller 1 causes operation list 34 to be displayed overlapped at a prescribed location of the menu image being displayed. Then, when operation of menu item selection regions 34b, 34c is detected at the prescribed location where operation list 34 is displayed, controller 1 judges that menu item A or menu item B has been selected by the user.

In this way, when a user operation is detected for a region where menu item selection region 34b is displayed, controller 1 recognizes that menu item A has been selected. On the other hand, when a user operation is detected for the region where menu item selection region 34c is displayed, it recognizes that menu item B has been selected.

With this vehicle onboard system, by displaying operation list 34, it becomes possible to select the menu items from a list instead of in a region where the menu item selection regions overlap.

The following scheme may be adopted for controller 1 of the vehicle onboard system. When the menu item selection regions corresponding to the various menu items overlap, menu item selection regions detected as overlapping at the touching location are displayed without overlap as menu item selection regions of selectable menu items. The following scheme may also be adopted for controller 1. When the user's touching location is judged to be a location where menu item selection region 31 B and menu item selection region 32B overlap each other, operation list 34 containing menu item selection region 34b of menu item A and menu item selection region 34c of menu item B is displayed as shown in FIG. 9.

As a result, this vehicle onboard system makes it possible to perform reselection of menu item selection region 34b or menu item selection region 34c from operation list 34 where the menu item selection regions do not overlap, so that the desired menu item can be selected.

In the following, the vehicle onboard system pertaining to Embodiment 5 of the invention is explained. Parts that are the same as those in the previous embodiments are assigned the same symbols, and their detailed explanation is not repeated.

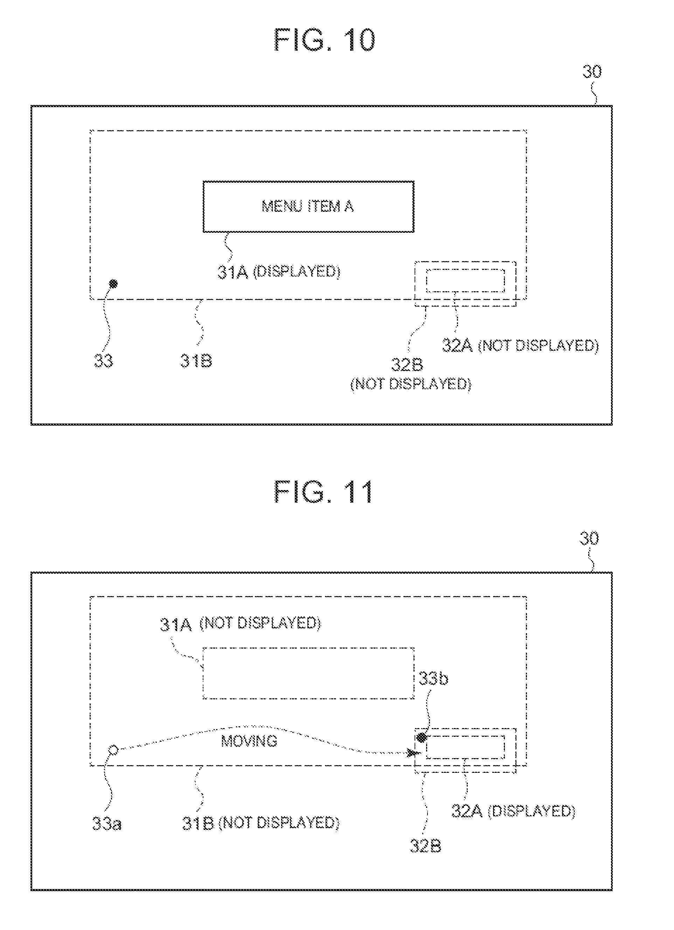

For the vehicle onboard system in Embodiment 5, when the menu item selection regions overlap each other, the menu item corresponding to the user's touching location is displayed. More specifically, as shown in FIG. 10, when menu item selection region 31 B and menu item selection region 32B overlap each other, if a location contained in menu item selection region 31B is detected as touching location 33 by controller 1, controller 1 displays only menu item A as the menu image, while menu item display region 32A and menu item selection region 32B for menu item B are not displayed.

As shown in FIG. 11, for this vehicle onboard system, when the user touching location is moved from 33a to 33b inside menu item selection region 32B of menu item B, menu item display region 31A displayed for menu item A is no longer displayed. Also, the vehicle onboard system displays menu item display region 32A of menu item B.

For this vehicle onboard system, when the menu item selection regions overlap each other, detection of touching location 33 is taken as a trigger to change the menu item.

The above described embodiments have been described in order to allow easy understanding of the present invention, and do not limit the present invention. On the contrary, the invention is intended to cover various modifications and equivalent arrangements included within the scope of the appended claims, which scope is to be accorded the broadest interpretation so as to encompass all such modifications and equivalent structures as is permitted under the law.

This application claims priority from Japanese Patent Application No. 2008-056894, filed 6th March 2008, the contents of which are expressly incorporated herein by reference.

## Claims

1. An apparatus for controlling a device that allows the user to touch its screen in performing an operation, the apparatus comprising:
image output means for displaying a first operation item in a first operation item display region on the screen and to display a second operation item in a second operation item display region on the screen; and
control means arranged to:
create a first operation item selection region extending to contain the first operation item display region which, when the user touches the first operation item selection region, permits the first operation item to be selected;
create a second operation item selection region extend to contain the second operation item display region which, when the user touches the second operation item selection region, permits the second operation item to be selected; and
select either the first operation item or the second operation item based on a prescribed parameter pertaining to the shapes of the first operation item selection region and the second operation item selection region when a location touched by the user is a region where the first operation item selection region and the second operation item selection region overlap each other on the screen.

2. An apparatus as claimed in claim 1, wherein the prescribed parameter is such that either the first operation item or the second operation item is selected belonging to that of the first operation item selection region or the second operation item selection region for which its centroid is a shorter distance from the location touched by the user.

3. An apparatus as claimed in claim 1, wherein the prescribed parameter is such that either the first operation item or the second operation item is selected belonging to that of the first operation item selection region or the second operation item selection regions for which its size is smallest.

4. An apparatus as claimed in any preceding claim, wherein the image output means is arranged to display at least one of the first operation item selection region and the second operation item selection region on the screen responsive to the control means.

5. An apparatus as claimed in any preceding claim, wherein the control means is arranged to display the location touched by the user on the screen.

6. A method for operating a device that allows a user to touch its screen in performing an operation, the method comprising:
displaying a first operation item in a first operation item display region of the screen;
creating a first operation item selection region permitting selection of the first operation item when the user touches the first operation item selection region, the first operation item selection region extending to contain the first operation item display region;
displaying a second operation item in a second operation item display region of the screen;
creating a second operation item selection region permitting selection of the second operation item when the user touches the second operation item selection region, the second operation item selection region extending to contain the second operation item display region; and
selecting one of the first operation item and the second operation item using a prescribed parameter pertaining to shapes of the first operation item selection region and the second operation item selection region when a location touched by the user is a region where the first operation item selection region and the second operation item selection region overlap each other on the screen.

7. A method as claimed in claim 6, wherein the prescribed parameter is a centroid, the first operation item selection region having a first centroid and the second operation item selection region having a second centroid.

8. A method as claimed in claim 7, wherein selecting one of the first operation item and the second operation item using the prescribed parameter comprises:
selecting the first operation item when the first centroid is closer to the location touched by the user than the second centroid; and
selecting the second operation item when the second centroid is closer to the location touched by the user than the first centroid.

9. A method as claimed in claim 6, wherein the prescribed parameter is a size, the first operation item selection region having a first size and the second operation item selection region having a second size.

10. A method as claimed in claim 9, wherein selecting one of the first operation item and the second operation item using the prescribed parameter comprises:
selecting the first operation item when the first size is smaller than the second size; and
selecting the second operation item when the second size is smaller than the first size.

11. A method as claimed in any of claims 6 to 10, comprising displaying at least one of the first operation item selection region and the second operation item selection region on the screen.

12. A method as claimed in any of claims 6 to 11, comprising displaying the location touched by the user on the screen.

13. A vehicle having an apparatus or adapted to use a method as claimed in any preceding claim.
